(19) Europäisches Patentamt / European Patent Office / Office européen des brevets

(11) **EP 3 202 838 A1**

(12) **EUROPEAN PATENT APPLICATION**
published in accordance with Art. 153(4) EPC

(43) Date of publication:
**09.08.2017 Bulletin 2017/32**

(21) Application number: **15846893.4**

(22) Date of filing: **25.09.2015**

(51) Int Cl.:
***C08J 9/36*** *(2006.01)*

(86) International application number:
**PCT/JP2015/077194**

(87) International publication number:
**WO 2016/052357 (07.04.2016 Gazette 2016/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.09.2014 JP 2014199444**

(71) Applicant: **Nitto Denko Corporation**
**Ibaraki-shi, Osaka 567-8680 (JP)**

(72) Inventor: **MATSUO Naoyuki**
**Ibaraki-shi**
**Osaka 567-8680 (JP)**

(74) Representative: **Müller-Boré & Partner**
**Patentanwälte PartG mbB**
**Friedenheimer Brücke 21**
**80639 München (DE)**

# (54) POROUS SILICONE BODY AND METHOD FOR PRODUCING POROUS SILICONE BODY

(57) The present invention relates to a porous silicone body having communicating pores and a three-dimensional network silicone skeleton that forms the pores, wherein the silicone skeleton is formed by polymerization of a bifunctional alkoxysilane and a trifunctional alkoxysilane, and the proportion of unreacted parts in the silicone skeleton is 10 mol% or less. The porous silicone body of the present invention has high flexibility and high heat resistance, and further has excellent recoverability of heat-resistant cushioning properties.

Fig. 3

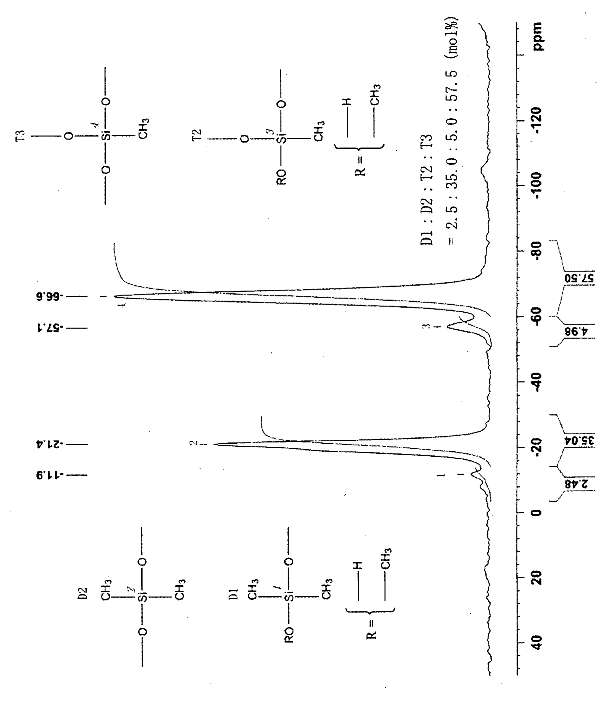


EP 3 202 838 A1

## Description

### Technical Field

The present invention relates to a porous silicone body and a method for producing a porous silicone body.

### Background Art

A sol-gel reaction involving phase separation has conventionally been known as a method for obtaining a monolithic porous material having continuous though-holes with controlled sizes in an organic-inorganic hybrid system using an oxide such as silica or titania, and a trifunctional alkoxysilane as starting materials (see Patent Documents 1 and 2). However, in those porous bodies, elastic modulus of a gel is extremely low, and brittleness is high as a whole. Therefore, it was difficult to impart flexibility withstanding large deformation to the porous bodies.

In view of the conventional problems, studies on a monolithic porous material further having high flexibility are proceeding. Patent Document 3 describes the preparation of a silicone monolithic body of an aerogel or xerogel having continuously penetrating flow channels and a silicone skeleton capable of dissolving chemical species by using both a bifunctional group-containing alkoxysilane and a trifunctional group-containing alkoxysilane or trifunctional or higher group-containing alkoxysilane as staring materials, copolymerizing those silanes by a sol-gel reaction, forming a network by Si-O bonds and simultaneously performing phase separation. Patent Document 3 further describes that the silicone monolithic body has both high flexibility and high porosity.

### Prior Art Documents

#### Patent Document

Patent Document 1: Japanese Patent No. 2893104
Patent Document 2: Japanese Patent No. 3397255
Patent Document 3: JP-A-2014-61457

### Summary of the Invention

#### Problems that the Invention is to Solve

As a result of investigations on the silicone monolithic body described in Patent Document 3, the prevent inventors obtained the following finding. The silicone monolithic body had high flexibility and high heat resistance due to siloxane bonds. However, it became clear that when the silicone monolithic body was placed under compression at high temperature and the pressure was then released, its shape could not return to the state before compression at high temperature, and recoverability of heat-resistant cushioning properties were not sufficient.

Accordingly, an object of the present invention is to provide a novel material having high flexibility and high heat resistance and additionally having excellent recoverability of heat-resistant cushioning properties, and a method for producing the material.

#### Means for Solving the Problems

As a result of further extensive and intensive investigations in view of the above problems, the present inventors have found that in a specific porous silicone body having communicating pores and a three-dimensional network silicone skeleton that forms the pores, the above problems can be solved by controlling the proportion of unreacted parts in the silicone skeleton, and have reached to complete the present invention.

Specifically, a porous silicone body according to the present invention is a porous silicone body having communicating pores and a three-dimensional network silicone skeleton that forms the pores, wherein the silicone skeleton is formed by the polymerization of a bifunctional alkoxysilane and a trifunctional alkoxysilane, and the proportion of unreacted parts in the silicone skeleton is 10 mol% or less.

The porous silicone body according to the present invention is preferably that 50% compression set at a test temperature of 150°C is 5% or less. Furthermore, it is preferred that 50% compression set at a test temperature of 250°C is 10% or less.

A method for producing a porous silicone body according to the present invention is a method for producing

the above-described porous silicone body, and comprises a step of copolymerizing a bifunctional alkoxysilane and a trifunctional alkoxysilane by a sol-gel reaction involving phase separation to form a porous silicone body having communicating pores and a three-dimensional network silicone skeleton that forms the pores, and a step of heat-treating the porous silicone body at a temperature lower than the thermal decomposition initiation temperature thereof.

In the method for producing a porous silicone body according to the present invention, the heat treatment is conducted at a temperature of preferably 100 to 320°C, and more preferably 150 to 300°C. Furthermore, the heat treatment is preferably conducted for 8 to 120 hours.

Advantageous Effects of the Invention

The porous silicone body according to the present invention has high flexibility and high heat resistance, and additionally has excellent recoverability of heat-resistant cushioning properties.

Brief Description of the Drawings

FIG. 1 is an electron micrograph of the porous silicone body of the present invention.
FIG. 2 is a schematic view explaining evaluation test of recoverability of heat-resistant cushioning properties.
FIG. 3 is a view showing solid $^{29}$Si-NMR spectrum of the porous silicone body of Example 1.
FIG. 4 is a view showing solid $^{29}$Si-NMR spectrum of the porous silicone body of Comparative Example 1.

Mode for Carrying Out the Invention

The present invention is described in detail below.

(Porous silicone body)

The porous silicone body of the present invention is a porous silicone body having communicating pores and a three-dimensional network silicone skeleton that forms the pores, wherein the silicone skeleton is formed by the polymerization of a bifunctional alkoxysilane and a trifunctional alkoxysilane, and the proportion of unreacted parts in the silicone skeleton is 10 mol% or less.

The porous silicone body of the present invention has communicating pores and a three-dimensional network silicone skeleton that forms the pores. Specifically, the porous silicone body of the present invention has a monolithic structure. The "monolithic structure" used herein is a bicontinuous structure integrally constituted by a continuous three-dimensional network skeleton and communicating pores.

The silicone skeleton in the porous silicone body of the present invention is formed by the copolymerization of a bifunctional alkoxysilane and a trifunctional alkoxysilane. The porous silicone body of the present invention has a monolithic structure having the three-dimensional network structure thus formed and communicating pores, and as a result, can have high flexibility and high heat resistance based on siloxane bonds. Electron micrograph of the porous silicone body of the present invention is shown in FIG. 1.

The bifunctional alkoxysilane has four bonding groups bonded to silicon. Of the four bonding groups, two groups are alkoxy groups that participate in polymerization (bonding), and the remaining two groups are modifying groups that do not participate in a reaction. The bifunctional alkoxysilane is represented by the following chemical formula (1).

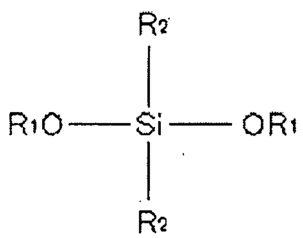

(1)

The alkoxy group ($-OR_1$) in the bifunctional alkoxysilane is preferably an alkoxy group having 1 to 5 carbon atoms. From the standpoint of hydrolysis reaction rate, the alkoxy group is preferably methoxy group, ethoxy group or propoxy group, and more preferably methoxy group or ethoxy group. Two alkoxy groups ($-OR_1$) in the bifunctional alkoxysilane may be the same or different.

Examples of the modifying group ($-R_2$) in the bifunctional alkoxysilane include a substituted or unsubstituted alkyl group, an aryl group, a vinyl group and a mercaptoalkyl group.

The alkyl group in the substituted or unsubstituted alkyl group is preferably an alkyl group having 1 to 5 carbon atoms. Methyl group or ethyl group is preferred, and methyl group is more preferred. Example of the substituent includes a halogen element such as fluorine, chlorine, bromine or iodine. The substituted alkyl group is preferably a fluoroalkyl group.

Examples of the aryl group include phenyl group, tolyl group, xylyl group, biphenylyl group and naphthyl group. Phenyl group is preferred.

Examples of the mercaptoalkyl group include mercaptomethyl group, mercaptoethyl group and mercaptopropyl group. Mercaptopropyl group is preferred.

Two modifying groups ($-R_2$) in the bifunctional alkoxysilane may be the same or different. From the standpoint of imparting functions such as water repellency and heat resistance to the structure to be obtained, at least one of those two modifying groups is preferably selected from the group consisting of methyl group, phenyl group and a fluoroalkyl group.

Examples of the bifunctional alkoxysilane specifically include dimethyl dimethoxysilane, methylphenyl dimethoxysilane, methylvinyl dimethoxysilane, 3-mercaptopropylmethyl dimethoxysilane and 3,3,3-trifluoropropylmethyl dimethoxysilane. From the standpoint of improvement of heat resistance, dimethyl dimethoxysilane and methylphenyl dimethoxysilane are particularly preferred. The bifunctional alkoxysilane may be used in one kind alone or as mixtures of two or more kinds.

The trifunctional alkoxysilane has four bonding groups bonded to silicon. Of the four bonding groups, three groups are alkoxy groups that participate in polymerization (bonding), and the remaining one group is a modifying group that does not participate in a reaction. The trifunctional alkoxysilane is represented by the following chemical formula (2).

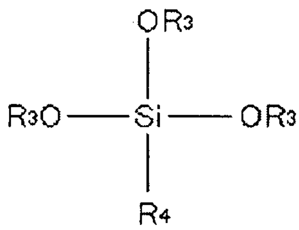
(2)

Examples of the alkoxy group ($-OR_3$) in the trifunctional alkoxysilane include the same groups as in the alkoxy group ($-OR_1$) in the bifunctional alkoxysilane. Examples of the modifying group ($-R_4$) in the trifunctional alkoxysilane include the same groups as in the modifying group ($-R_2$) in the bifunctional alkoxysilane.

The modifying group in the trifunctional alkoxysilane is preferably methyl group, phenyl group or a fluoroalkyl group, from the standpoint of imparting functions such as water repellency and heat resistance to the structure to be obtained.

Examples of the trifunctional alkoxysilane specifically include methyl trimethoxysilane, vinyl trimethoxysilane and 3-mercaptopropyl trimethoxysilane. Methyl trimethoxysilane is particularly preferred from the standpoint of the improvement of heat resistance. The trifunctional alkoxysilane may be used in one kind alone or as mixtures of two or more kinds.

In the present invention, tri- or more polyfunctional alkoxysilanes may be further copolymerized together with the bifunctional alkoxysilane and trifunctional alkoxysilane. The tri- or more polyfunctional alkoxysilanes used herein mean silanes having more than three alkoxy groups participating in polymerization (bonding). Examples of the tri- or more polyfunctional alkoxysilanes include alkoxysilanes having -Si-C-C-Si- structure or -Si-phenyl-Si- structure. The number of bonding groups to Si is 4. However, by using the alkoxysilanes having -Si-C-C-Si- structure or -Si-phenyl-Si- structure as a crosslinking agent, 6 functional groups can be utilized, and denser silicone network can be formed.

Example of the alkoxysilane having -Si-C-C-Si- structure includes 1,2-bis(methyldiethoxysilyl)ethane.

Polymerization ratio between the bifunctional alkoxysilane and the trifunctional alkoxysilane can be appropriately selected considering properties and the like of a desired porous silicone body, and is not particularly limited. The polymerization ratio (bifunctional alkoxysilane:trifunctional alkoxysilane) is preferably 2:8 to 6:4, and more preferably 3:7 to 5:5, in volume ratio. When the polymerization ratio is 2:8 or more, it is preferred in imparting flexibility to a porous body to be obtained. Furthermore, when the polymerization ratio is 6:4 or less, it is preferred in maintaining mechanical strength.

When the tri- or more polyfunctional alkoxysilanes are further copolymerized together with the bifunctional alkoxysilane and trifunctional alkoxysilane, the polymerization ratio of the tri- or more polyfunctional alkoxysilanes is not particularly limited. However, volume ratio to the total of the bifunctional alkoxysilane and trifunctional alkoxysilane (total

of bifunctional alkoxysilane and trifunctional alkoxysilane: tri- or more polyfunctional alkoxysilanes) is, for example, 6:4 to 4:6.

In the porous silicone body of the present invention, the proportion of unreacted parts in the silicone skeleton is 10 mol% or less. According to the present invention, excellent recoverability of heat-resistant cushioning properties can be obtained by controlling the proportion of unreacted parts in the silicone skeleton to 10 mol% or less.

The "recoverability of cushioning properties" used herein means properties that when an object is placed under compression at a certain temperature and the pressure is then released, the shape of the object recovers the shape before compression. The "recoverability of heat-resistant cushioning properties" used herein means properties that when an object is placed under compression at high temperature and the pressure is then released, the shape of the object recovers the shape before compression at high temperature.

In the present invention, the recoverability of (heat-resistant) cushioning properties can be evaluated as follows.

Test Sample 1 having a size of (10 mm vertical × 10 mm horizontal) × $T_0$ thick is prepared. As shown in FIG. 2, Test Sample 1 is compressed until a thickness of Test Sample 1 after compression by a compression tester 2 under a certain test temperature reaches 50% of the thickness before compression, that is, $T_0/2$, and is allowed to stand under the test temperature for 22 hours. To return the test temperature to ordinary temperatures (23°C), Test Sample 1 is allowed to stand at ordinary temperatures (23°C) for 2 hours, and the pressure is then released. After the lapse of 1 minute, the thickness ($T_1$) of Test Sample 1 is measured, and compressive residual strain (50% compression set) is calculated based on the following formula.

$$\text{Compressive residual strain (50\% compression set) (\%)} = (T_0 - T_1)/T_0 \times 100$$

$T_0$: Thickness (mm) before test
$T_1$: Thickness (mm) after test

It says that recoverability of (heat-resistant) cushioning properties at the test temperature is excellent as the compressive residual strain (50% compression set) thus calculated is small. In the present invention, the compressive residual strain (50% compression set) at a test temperature of 150°C is preferably 5% or less, and more preferably 2% or less. Furthermore, the compressive residual strain (50% compression set) at a test temperature of 250°C is preferably 10% or less, more preferably 5% or less, and particularly preferably 3% or less.

As described before, in the porous silicone body of the present invention, the proportion of unreacted parts in the silicone skeleton is controlled to 10 mol% or less. Thus, when the proportion of unreacted parts in the silicone skeleton is controlled to small proportion, the porous silicone body of the present invention has high flexibility and high heat resistance due to its structure, and additionally can exhibit excellent recoverability of heat-resistant cushioning properties.

In the present invention, the proportion of unreacted parts in the silicone skeleton can be derived from the measurement result by solid $^{29}$Si-NMR.

The silicone skeleton in the porous silicone body of the present invention is formed by copolymerization between the bifunctional alkoxysilane and the trifunctional alkoxysilane. When the porous silicone body of the present invention is analyzed by solid $^{29}$Si-NMR, peaks due to the following four structural units are observed in NMR spectrum obtained. The structural unit of the chemical formula (3) is referred to as D1, the structural unit of the chemical formula (4) is referred to as D2, the structural unit of the chemical formula (5) is referred to as T2, and the structural unit of the chemical formula (6) is referred to as T3. The structural units D1 and D2 are structural units derived from the bifunctional alkoxysilane, and the structure units T2 and T3 are structural units derived from the trifunctional alkoxysilane.

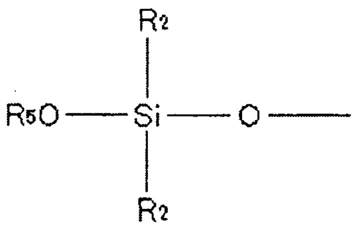 (3)

(In the formula, $R_5$ represents H or $R_1$. $R_1$ and $R_2$ are the same as defined in the chemical formula (1))

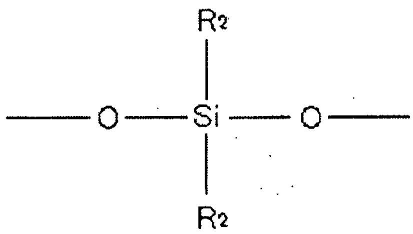

(4)

(In the formula, $R_2$ is the same as defined in the chemical formula (1))

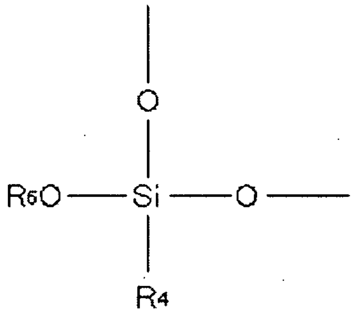

(5)

(In the formula, $R_6$ represents H or $R_3$. $R_3$ and $R_4$ are the same as defined in the chemical formula (2))

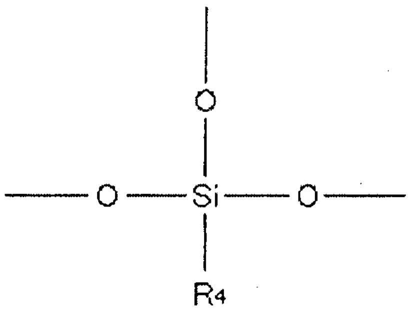

(6)

(In the formula, $R_4$ are the same as defined in the chemical formula (2))

The structural unit D1 has $OR_5$ as an unreacted group. The structural unit $T_2$ also has $OR_6$ as an unreacted group. On the other hand, the structural units D2 and T3 do not have an unreacted group. The proportion (mol%) of each structural unit can be derived from an integrated value of each peak in NMR spectrum obtained by solid $^{29}$Si-NMR analysis. When the structural units D1 and T2 are unreacted parts and the structural units D2 and T3 are reacted parts, the total of the proportion (mol%) of the unreacted parts (the structural units D1 and T2) occupied in the whole structural units is defined as the proportion of unreacted parts in the silicone skeleton.

When tri- or more polyfunctional alkoxysilanes have been further copolymerized together with the bifunctional alkoxysilane and trifunctional alkoxysilane, the proportions of the structural units (unreacted parts) having unreacted groups derived from more than trifunctional alkoxysilanes and the structural units (reacted parts) that do not have unreacted groups are similarly derived in addition to the structural units D1, D2, T2 and T3, and the total of the proportions (mol%) of the structural unit D1, the structural unit D2 and the structural unit having unreacted groups derived from tri- or more polyfunctional alkoxysilanes occupied in the whole structural units is defined as the proportion of unreacted parts in the silicone skeleton.

In the present invention, the proportion of unreacted parts in the silicone skeleton is 10 mol% or less, preferably 9 mol% or less, and more preferably 8 mol% or less. When the proportion of unreacted parts is controlled to 10 mol% or less, excellent recoverability of heat-resistant cushioning properties can be obtained. On the other hand, the lower limit of the proportion of the unreacted parts is not particularly limited. However, when the proportion is excessively small, flexibility may deteriorate. Therefore, the proportion of unreacted parts is, for example, 2 mol% or more, and preferably 3 mol% or more.

The proportion of unreacted parts in the silicone skeleton can be controlled by, for example, a heat treatment (annealing treatment) described hereinafter. Furthermore, the proportion can also be controlled by irradiation with ultraviolet rays emitted from laser, LED, lamp light source or the like.

The porosity of the porous silicone body of the present invention is not particularly limited. The porosity is preferably 50% or more, more preferably 80% or more, and still more preferably 90% or more. When the porosity is less than 50%, flexibility and lightness may deteriorate. On the other hand, when the porosity is too high, mechanical strength may decrease. Therefore, the porosity is preferably 95% or less.

The average pore size of the communicating pores in the porous silicone body of the present invention is not particularly limited, but is, for example, 50 to 50,000 nm. The skeleton diameter of the silicone skeleton is not particularly limited, but is, for example, 50 to 10,000 nm. The average pore size of the communicating pores in the porous silicone body of the present invention can be measured by SEM, optical microscope or the like. The skeleton diameter of the silicone skeleton can be measured by SEM, optical microscope or the like.

The porous silicone body of the present invention is that, in an unconfined compression test, shape recovery rate in 10 seconds when the porous silicone body has been compressed to 80% and the pressure has then been released is preferably 90% or more, more preferably 95% or more, and particularly preferably 100%. When the shape recovery rate is 90% or more, high flexibility can be exhibited.

The porous silicone body of the present invention is that in TG-GTA (Thermogravimetry-Differential Thermal Analysis), the thermal decomposition initiation temperature is preferably 300°C or higher, and more preferably 350°C or higher.

(Method for producing porous silicone body)

The method for producing a porous silicone body of the present invention (hereinafter referred to as "the production method of the present invention") is described below.

The method for producing a porous silicone body of the present invention is the production method of the above-described porous silicone body, and comprises a step of copolymerizing a bifunctional alkoxy silane and a trifunctional alkoxysilane by a sol-gel reaction involving phase separation to form a porous silicone body having communicating pores and a three-dimensional network silicone skeleton that forms the pores, and a step of heat-treating the porous silicone body at a temperature lower than the thermal decomposition initiation temperature thereof.

As a first step in the production method of the present invention, the bifunctional alkoxysilane and trifunctional alkoxysilane are used as precursors, network of Si-O bonds is formed by copolymerization of those by a sol-gel reaction and simultaneously an acid-base two step reaction is conducted by an acid catalyst and a base catalyst while controlling phase separation by a surfactant, thereby forming a porous silicone body having communicating pores and a three-dimensional network silicone skeleton that forms the pores. One embodiment of the first step is described below.

Acetic acid as an acid catalyst is mixed with water as a solvent in a vessel such as a glass vessel to prepare an acetic acid aqueous solution. n-Hexadecyltrimethylammonium chloride (CTAC) as a surfactant and urea as a base catalyst are then added to the acetic acid aqueous solution.

Bifunctional alkoxysilane and trifunctional alkoxysilane as precursors are added to the resulting mixture, followed by stirring, for example, at 10 to 30°C for 0.5 to 2.0 hours, thereby proceeding hydrolysis of the precursors.

The solution obtained is transferred to a closed vessel, and heated, for example, at 50 to 85°C for 6 to 48 hours. Urea is hydrolyzed, and under basic conditions, the precursors hydrolyzed are polycondensed by a sol-gel reaction. Thus, a wet gel is obtained.

The wet gel obtained is impregnated into, for example, a mixed solution of water and isopropyl alcohol, and the resulting mixture is washed with isopropyl alcohol, methanol or the like to remove unreacted precursors and surfactants.

The monolithic gel thus obtained is impregnated into a non-polar solvent such as normal hexane to perform solvent substitution, followed by drying, for example, at 20 to 80°C for 5 to 24 hours. Thus, a porous silicone body having a monolithic structure is obtained as a xerogel. Furthermore, a porous silicone body having a monolithic structure as an aerogel can also be obtained by further subjecting the monolithic gel obtained above to supercritical drying with carbon dioxide gas or the like.

In the first step, the kinds of materials and the order of addition thereof, reaction conditions, and the like can be appropriately adjusted so long as a porous silicone body having the desired monolithic structure is obtained, and therefore, the first step is not limited to the above embodiment. For example, cetyltrimethylammonium bromide (CTAB) or the like may be used as a surfactant in place of n-hexadecyltrimethylammonium chloride (CTAC). Oxalic acid, formic acid or the like may be used as an acid catalyst in place of acetic acid. Ammonia water or the like may be used as a base catalyst in place of urea. Furthermore, in addition to the bifunctional alkoxysilane and trifunctional alkoxysilane, more than trifunctional alkoxysilanes may be further used as a precursor.

As the subsequent second step, the porous silicone body obtained in the first step is subjected to a heat treatment (annealing treatment) at a temperature lower than the thermal decomposition initiation temperature thereof. The proportion of unreacted parts in the silicone skeleton constituting the porous silicone body can be controlled by

performing the heat treatment (annealing treatment). The heat treatment (annealing treatment) can be performed by, for example, maintaining the porous silicone body in a heating furnace heated to a given temperature for a given period of time.

The heating temperature in the heat treatment (annealing treatment) is a temperature lower than the thermal decomposition initiation temperature of the porous silicone body, and can be appropriately determined considering the kinds of starting materials used (bifunctional alkoxysilane, trifunctional alkoxysilane and the like), heating time, and the like. The heating temperature is preferably 320°C or lower, and more preferably 300°C or lower.

The lower limit of the heating temperature in the heat treatment (annealing treatment) is not particularly limited. The lower limit is, for example, 100°C or higher, and preferably 150°C or higher. In order that the porous silicone body has the desired recoverability of heat-resistant cushioning properties, it is preferred that the porous silicone body is subjected to the heat treatment (annealing treatment) at a temperature higher than the temperature at which the porous silicone body is used under compression at high temperature.

The heating time in the heat treatment (annealing treatment) can be appropriately determined considering the kinds of starting materials used (bifunctional alkoxysilane, trifunctional alkoxysilane and the like), heating temperature, and the like, and is not particularly limited. The heating time is, for example, 8 hours or more, preferably 12 hours or more, and more preferably 18 hours. The heating time is, for example, 120 hours or less, preferably 100 hours or less, more preferably 80 hours or less, still more preferably 70 hours or less, and still further more preferably 60 hours or less. However, where the porous silicone body is subjected to the heat treatment (annealing treatment) at high temperature for a long period of time, there is a possibility that the porous silicone body deteriorates and does not exhibit the desired flexibility and recoverability of heat-resistant cushioning properties. On the other hand, in the heat treatment (annealing treatment) at low temperature for a short period of time, there is a possibility that the proportion of unreacted parts in the silicone skeleton cannot be sufficiently controlled. Therefore, in performing the heat treatment (annealing treatment), it is preferred to conduct the heat treatment by selecting appropriate conditions in consideration of those.

The reason that the porous silicone body of the present invention has excellent recoverability of heat-resistant cushioning properties is not clear, but is presumed to be as follows.

In the porous silicone body before the heat treatment (annealing treatment) prepared by the first step, the proportion of unreacted parts in the silicone skeleton is high. Therefore, it is presumed that in the case where this porous silicone body is maintained under compression conditions at high temperature, the reaction (crosslinking) of the unreacted parts proceeds under the compression conditions at high temperature, the shape in the compressed state is stored, and as a result, the shape before compression cannot be recovered even though the pressure is released thereafter.

On the other hand, in the production method of the present invention, after preparing the porous silicone body by the first step, the heat treatment (annealing treatment) is performed to the porous silicone body, thereby previously allowing to proceed the reaction (crosslinking) of unreacted parts in the silicone skeleton under non-compression conditions and controlling the proportion of the unreacted parts low as 10 mol% or less. Therefore, it is presumed that even though the porous silicone body of the present invention is maintained under compression conditions at high temperature, the reaction (crosslinking) of unreacted parts does not proceed under the compression conditions at high temperature, or even if the reaction proceeds, the reaction is limitative, and as a result, the porous silicone body can exhibit excellent recoverability of heat-resistant cushioning properties when the pressure has been thereafter.

The porous silicone body of the present invention has high flexibility and heat resistance, and additionally has excellent recoverability of heat-resistant cushioning properties. Therefore, the porous silicone body can be usefully used as a damping material, a vibration-proof material, a cushioning material and the like in the fields of aviation, space, automobile, nuclear powder facility, ship and the like.

## Examples

The present invention is further described below by reference to examples, but the invention is not construed as being limited to the following examples.

### (Example 1)

n-Hexadecyltrimethylammonium chloride (10 g) as a surfactant and urea (50 g) were added to 5 mM acetic acid aqueous solution (150 mL), followed by mixing those in a glass vessel under stirring.

Methyl trimethoxysilane (30 mL) and dimethyl dimethoxysilane (20 mL) as precursors were added to the glass vessel, followed by stirring with a stirrer for 60 minutes. After stirring, the resulting solution was transferred to a closed vessel, and heated at 80°C for 24 hours, thereby hydrolyzing urea to form basic conditions. The precursors hydrolyzed were polycondensed by a sol-gel reaction under the basic conditions. The wet gel obtained was impregnated into a water/isopropyl alcohol (1:1) solution, and then washed with isopropyl alcohol to remove unreacted reagents and surfactants. The monolithic gel thus obtained was impregnated into normal hexane to perform solvent substitution, and

then dried at 60°C for 24 hours. Thus, a porous silicone body having a monolithic structure as a xerogel was obtained.

The porous silicone body obtained was further subjected to annealing treatment in a heating furnace at a temperature of 250°C for 48 hours. Thus, a porous silicone body of Example 1 was prepared.

(Example 2)

A porous silicone body of Example 2 was prepared in the same manner as in Example 1, except that an annealing treatment was conducted in a heating furnace at 150°C for 50 hours.

(Comparative Example 1)

A porous silicone body of Comparative Example 1 was prepared in the same manner as in Example 1, except that an annealing treatment was not conducted.

(Solid $^{29}$Si-NMR analysis)

Porous silicone bodies of Example 1 and Comparative Example 1 were analyzed by solid $^{29}$Si-NMR. Solid $^{29}$Si-NMR spectrum of the porous silicone body of Example 1 is shown in FIG. 3. Solid $^{29}$Si-NMR spectrum of the porous silicone body of Comparative Example 1 is shown in FIG. 4.

The proportions (mol%) of the structural units D1, D2, T2 and T3 in the silicone skeletons in the porous silicone bodies of Example 1 and Comparative Example 1 were calculated by analyzing those solid $^{29}$Si-NMR spectra, respectively. The results are shown in Table 1. The porous silicone body of Example 2 was also analyzed by solid $^{29}$Si-NMR, and the proportions (mol%) of the structural units D1, D2, T2 and T3 in the silicone skeleton in the porous silicone body were calculated by the solid $^{29}$Si-NMR spectrum. The results are also shown in Table 1.

[Table 1]

| Solid $^{29}$Si-NMR analysis results (mol%) | D1 | D2 | T2 | T3 | D1+T2 |
|---|---|---|---|---|---|
| | Unreacted parts | Reacted parts | Unreacted parts | Reacted parts | Total of unreacted parts |
| Example 1 | 2.5 | 35.0 | 5.0 | 57.5 | 7.5 |
| Example 2 | 3.5 | 4.5 | 6.0 | 56.0 | 9.5 |
| Comparative Example 1 | 5.6 | 30.3 | 9.1 | 55.0 | 14.7 |

(Recoverability of (heat-resistant) cushioning properties)

Recoverability of (heat-resistant) cushioning properties was evaluated by the following method.

A test sample having a size of 10 mm vertical x 10 mm horizontal x 10 mm thick ($T_0$) of each porous silicone body of Example 1 and Comparative Example 1 was prepared. The test sample was compressed until the thickness of the test sample after compression by a compression tester reaches 50% (5 mm, $T_0/2$) before compression under the test temperature of each of -68°C, 80°C, 150°C and 250°C, and then allowed to stand under the test temperature for 22 hours. After allowing to stand at ordinary temperature (23°C) for 2 hours, the pressure was released, the thickness ($T_1$, unit: mm) of the test sample was measured after the lapse of 1 minute, and compressive residual strain (50% compression set) was calculated based on the following formula.

$$\text{Compressive residual strain (50\% compression set) (\%)} = (T_0 - T_1)/T_0 \times 100$$

$T_0$: Thickness (mm) before test

$T_1$: Thickness (mm) after test

50% Compression set (%) at the test temperature of each of -68°C, 80°C, 150°C and 250°C in each Example and Comparative Example is shown in Table 2

[Table 2]

| | | Test temperature | | | |
|---|---|---|---|---|---|
| | | -68°C | 80°C | 150°C | 250°C |
| 50% Compression set (%) | Example 1 | 1.8 | 2.4 | 3.2 | 5.0 |
| | Example 2 | 2.0 | 3.2 | 2.9 | 36.0 |
| | Comparative Example 1 | 2.0 | 4.8 | 45.0 | 48.0 |

In the porous silicone body of Example 1, the proportion of unreacted parts in the silicone skeleton was 7.5 mol%, 50% compression set (%) at the test temperature of 150°C was low as 3.2%, and 50% compression set (%) at the test temperature of 250°C was low as 5.0%. Thus, the porous silicone body had excellent recoverability of heat-resistant cushioning properties. In the porous silicone body of Example 2, the proportion of unreacted parts in the silicone skeleton was 9.5 mol%, and 50% compression set (%) at the test temperature of 150°C was low as 2.9%. Thus, the porous silicone body had excellent recoverability of heat-resistant cushioning properties. On the other hand, in the porous silicone body of Comparative Example 1, the proportion of unreacted parts in the silicone skeleton was 14.7 mol%, 50% compression set (%) at the test temperature of 150°C was high as 45.0%, and compression set (%) at the test temperature of 250°C was high as 48.0%. Thus, the porous silicone body did not have sufficient recoverability of heat-resistant cushioning properties.

Although the present invention has been described in detail and by reference to the specific embodiments, it is apparent to one skilled in the art that various modifications or changes can be made without departing the spirit and scope of the present invention.

This application is based on Japanese Patent Application No. 2014-199444 filed September 29, 2014, the disclosure of which is incorporated herein by reference in its entity.

Description of Reference Numerals and Signs

1: Test sample
2: Compression tester

**Claims**

1. A porous silicone body having communicating pores and a three-dimensional network silicone skeleton that forms the pores,
wherein the silicone skeleton is formed by polymerization of a bifunctional alkoxysilane and a trifunctional alkoxysilane, and
the proportion of unreacted parts in the silicone skeleton is 10 mol% or less.

2. The porous silicone body according to claim 1, having 50% compression set at a test temperature of 150°C of 5% or less.

3. The porous silicone body according to claim 1 or 2, having 50% compression set at a test temperature of 250°C of 10% or less.

4. A method for producing the porous silicone body according to any one of claims 1 to 3, comprising
a step of copolymerizing a bifunctional alkoxysilane and a trifunctional alkoxysilane by a sol-gel reaction involving phase separation to form a porous silicone body having communicating pores and a three-dimensional network silicone skeleton that forms the pores, and
a step of heat-treating the porous silicone body at a temperature lower than the thermal decomposition initiation temperature thereof.

5. The method according to claim 4, wherein the heat treatment is conducted at 100 to 320°C.

**6.** The method according to claim 5, wherein the heat treatment is conducted at 150 to 300°C.

**7.** The method according to any one of claims 4 to 6, wherein the heat treatment is conducted for 8 to 120 hours.

Fig. 1

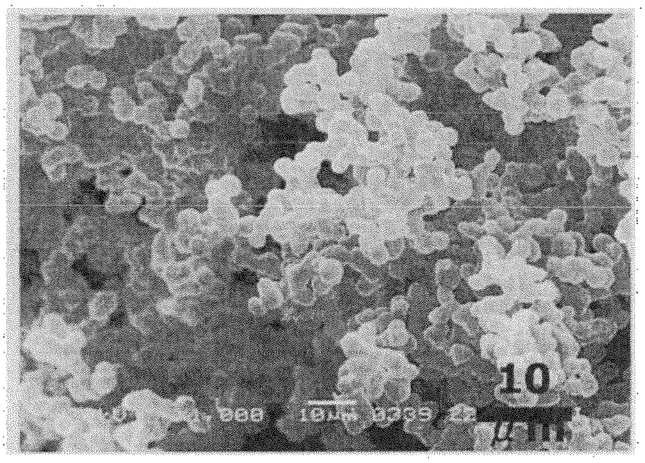


Fig. 2

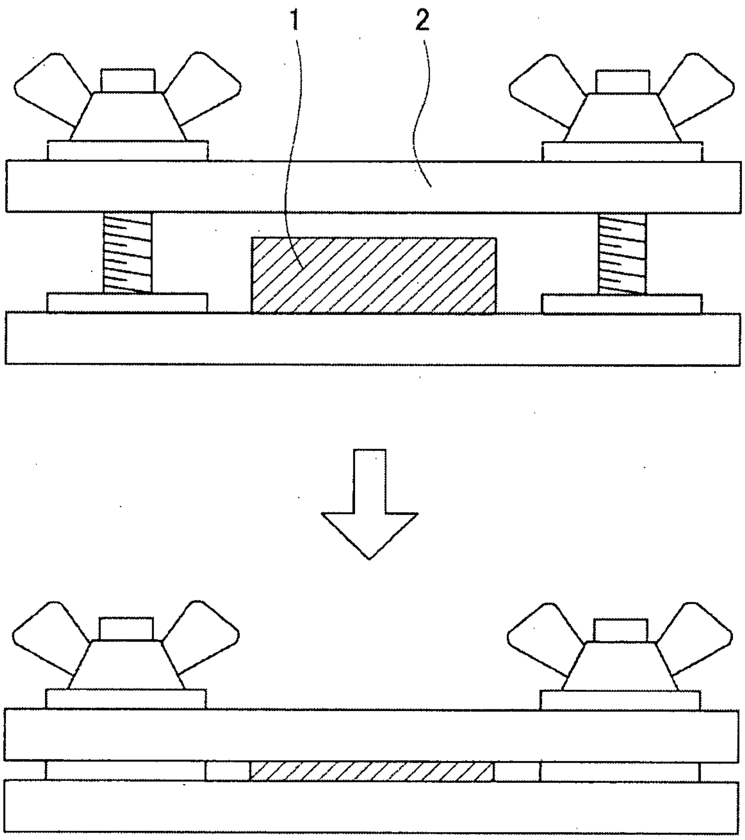

Fig. 3

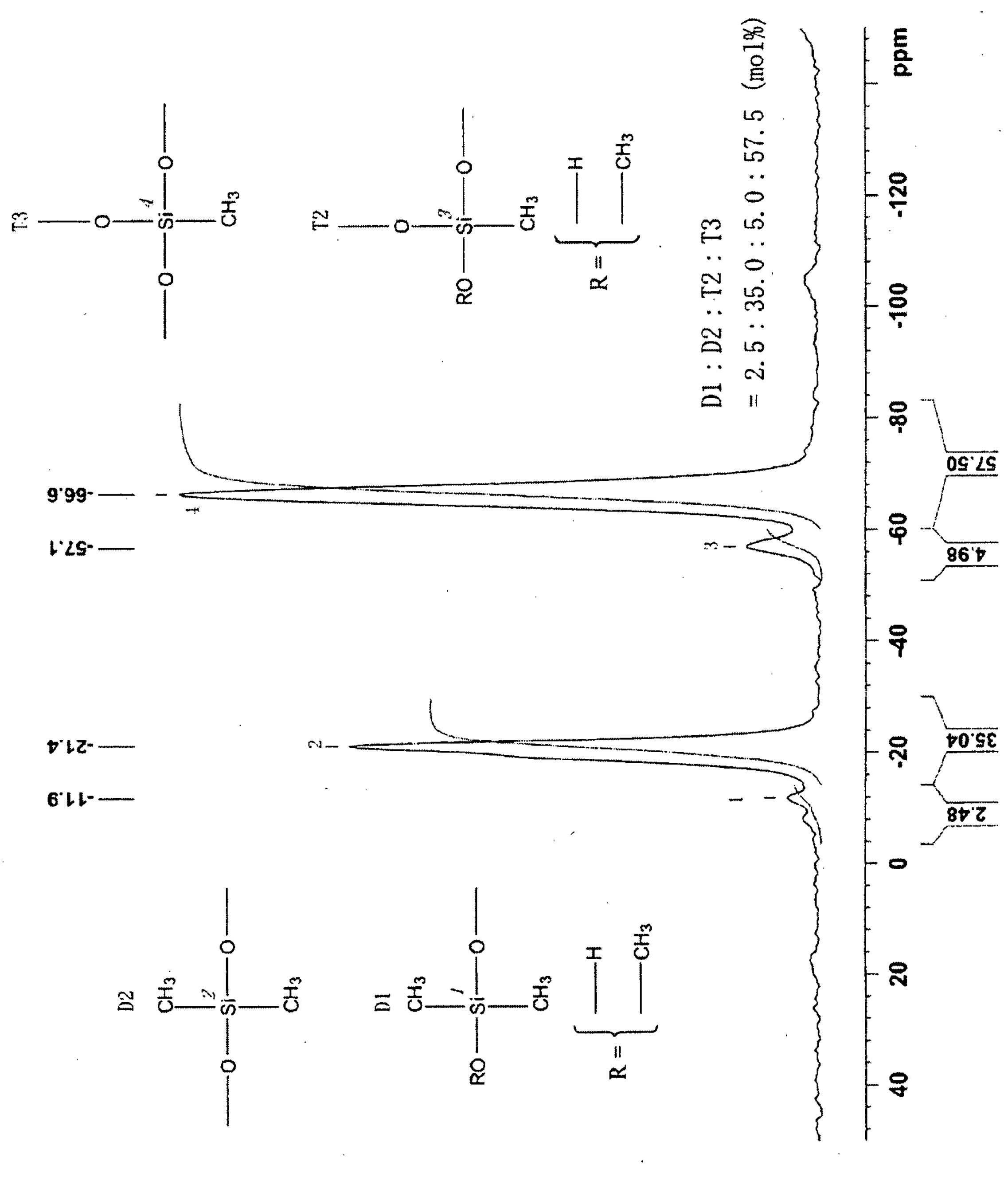
D1 : D2 : T2 : T3
= 2.5 : 35.0 : 5.0 : 57.5 (mol%)
-66.6
-57.1
-21.4
-11.9
57.50
4.98
35.04
2.48
ppm

Fig. 4

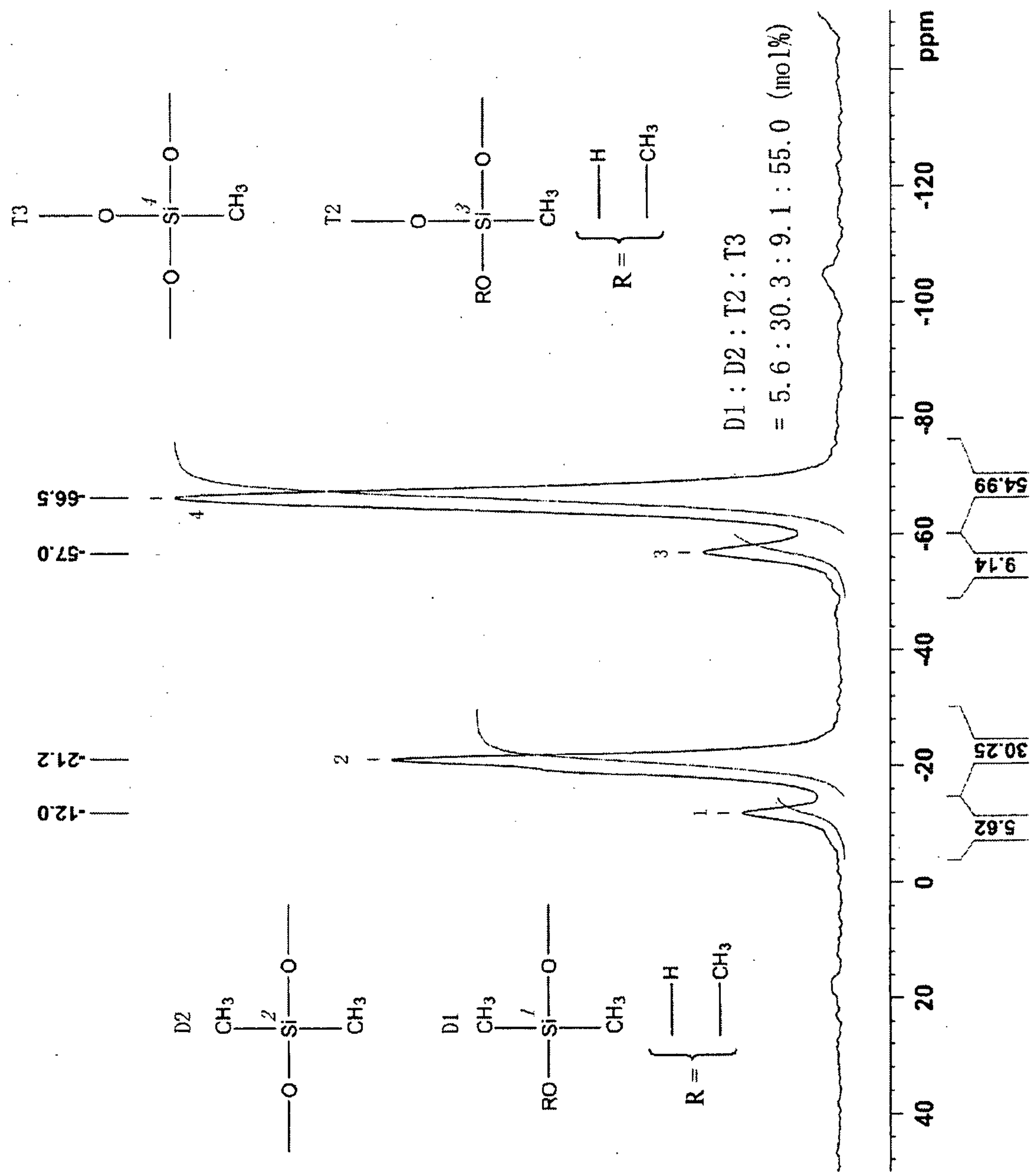
-66.5
-57.0
-21.2
-12.0
T3
T2
D2
D1
D1 : D2 : T2 : T3
= 5.6 : 30.3 : 9.1 : 55.0 (mol%)
54.99
9.14
30.25
5.62
ppm
-120
-100
-80
-60
-40
-20
0
20
40

## INTERNATIONAL SEARCH REPORT

International application No.
PCT/JP2015/077194

A. CLASSIFICATION OF SUBJECT MATTER
*C08J9/36*(2006.01)i

According to International Patent Classification (IPC) or to both national classification and IPC

B. FIELDS SEARCHED

Minimum documentation searched (classification system followed by classification symbols)
C08J9/00-9/42, C08G77/00-77/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2014-61457 A (Kyoto University), 10 April 2014 (10.04.2014), claims; fig. 1 & US 2014/0076070 A1 claims; fig. 1 | 1-7 |
| A | WO 2007/010949 A1 (Dynax Co., Ltd.), 25 January 2007 (25.01.2007), claims & EP 1908790 A1 claims & JP 5250900 B2 | 1-7 |
| A | JP 2004-182865 A (Hitachi Chemical Co., Ltd.), 02 July 2004 (02.07.2004), claims (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 December 2015 (11.12.15) | 22 December 2015 (22.12.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/077194

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-281535 A (Fujitsu Ltd.), 07 October 2004 (07.10.2004), claims (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2893104 B
- JP 3397255 B
- JP 2014061457 A
- JP 2014199444 A